# EUROPEAN PATENT APPLICATION

(11) **EP 3 637 129 A1**
(43) Date of publication of application: **15.04.2020**
(21) Application number: 18813167.6
(22) Date of filing: 01.06.2018
(51) Int. Cl.: G01S 7/481, G01C 3/06

(54) **ELECTROMAGNETIC WAVE DETECTION DEVICE, ELECTROMAGNETIC DETECTION SYSTEM, AND PROGRAM**

(30) Priority: 06.06.2017 JP 2017112010
(71) Applicant: Kyocera Corporation, Kyoto-shi, Kyoto 612-8501 (JP)
(72) Inventor: UCHIDA, Eri, Kyoto-shi Kyoto 612-8501 (JP); OKADA, Hiroki, Kyoto-shi Kyoto 612-8501 (JP)
(74) Representative: Viering, Jentschura & Partner mbB Patent- und Rechtsanwälte
(86) International application number: PCT/JP2018/021272
(87) International publication number: WO 2018/225659

(57) **Abstract**

An electromagnetic wave detection apparatus (10) includes a detector (18), a switching unit (16), and a controller (14). The detector (18) detects electromagnetic waves. The switching unit (16) includes a plurality of switching elements (19). The switching elements (19) are capable of switching between a first state and a second state. In the first state, the switching elements (19) propagate incident electromagnetic waves in a first direction (d1). In the second state, the switching elements (19) propagate incident electromagnetic waves in a second direction (d2). The controller (14) can control switching to the first state and the second state for each switching element (19). The controller (14) switches only a particular switching element (19), among the plurality of switching elements (19), to the first state.

## Description

### CROSS-REFERENCE TO RELATED APPLICATION

The present application claims priority to and the benefit of Japanese Patent Application No. 2017-112010 filed June 6, 2017, the entire contents of which are incorporated herein by reference.

### TECHNICAL FIELD

The present disclosure relates to an electromagnetic wave detection apparatus, an electromagnetic wave detection system, and a program.

### BACKGROUND

In recent years, apparatuses have been developed to acquire information related to the surroundings from the results of detection by a detector that detects electromagnetic waves. For example, an apparatus that uses laser radar to measure the distance to an object of detection is known. It is useful, in such an electromagnetic wave detection apparatus, to be able to change the field of view, which is the detection range of electromagnetic waves in the surrounding space. See patent literature (PTL) 1.

### CITATION LIST

### Patent Literature

PTL 1: JP2011-220732A

### SUMMARY

An electromagnetic wave detection apparatus according to a first aspect includes:
a detector configured to detect electromagnetic waves;
a switching unit including a plurality of switching elements capable of switching between a first state of propagating incident electromagnetic waves towards the detector and a second state of propagating incident electromagnetic waves in a direction other than the detector; and
a controller capable of controlling switching of each switching element to the first state and the second state and configured to switch only a particular switching element among the plurality of switching elements to the first state.

An electromagnetic wave detection system according to a second aspect includes:
a detector configured to detect electromagnetic waves;
a switching unit including a plurality of switching elements capable of switching between a first state of propagating incident electromagnetic waves towards the detector and a second state of propagating incident electromagnetic waves in a direction other than the detector; and
a controller capable of controlling switching of each switching element to the first state and the second state and configured to switch only a particular switching element among the plurality of switching elements to the first state.

A program according to a third aspect is for an electromagnetic wave detection apparatus including a detector configured to detect electromagnetic waves and a switching unit including a plurality of switching elements capable of switching between a first state of propagating incident electromagnetic waves towards the detector and a second state of propagating incident electromagnetic waves in a direction other than the detector, the program causing the electromagnetic wave detection apparatus to:
switch only a particular switching element among the plurality of switching elements to the first state.

### BRIEF DESCRIPTION OF THE DRAWINGS

In the accompanying drawings:
FIG. 1 is a configuration diagram schematically illustrating an electromagnetic wave detection apparatus according to a first embodiment;
FIG. 2 is a configuration diagram of an electromagnetic wave detection apparatus illustrating the propagation directions of electromagnetic waves when a portion of switching elements in FIG. 1 are switched to a first state and another portion of the switching elements are switched to a second state;
FIG. 3 is a timing chart of the timing of irradiation and detection of electromagnetic waves to illustrate the principle of ranging by a ranging sensor configured by an irradiator, a detector, and a controller of FIG. 1;
FIG. 4 is a configuration diagram schematically illustrating an electromagnetic wave detection apparatus that includes an electromagnetic wave detection apparatus according to a second embodiment;
FIG. 5 is a functional block diagram schematically illustrating the internal configuration of elements provided in the detector of FIG. 4; and
FIG. 6 is a timing chart indicating the emission timing of electromagnetic waves, the signal intensity of electric signals accumulated by a first accumulator and a second accumulator, and the detection timing in the elements to illustrate the principle of ranging by a ranging sensor configured by an irradiator, a detector, and a controller of FIG. 4.

### DETAILED DESCRIPTION

Embodiments of an electromagnetic wave detection apparatus to which the present disclosure is applied are described below with reference to the drawings. Conventionally, the field of view of an electromagnetic wave detection apparatus has been changeable by displacement along the optical axis of a detector and displacement in a direction perpendicular to the optical axis of an optical system. The configuration of this electromagnetic wave detection apparatus is complex, however, because of the need for a movable part for moving a structure such as the detector or the optical system. An electromagnetic wave detection apparatus to which the present disclosure is applied is configured to change the field of view without use of a movable part and can therefore change the field of view with a simpler configuration.

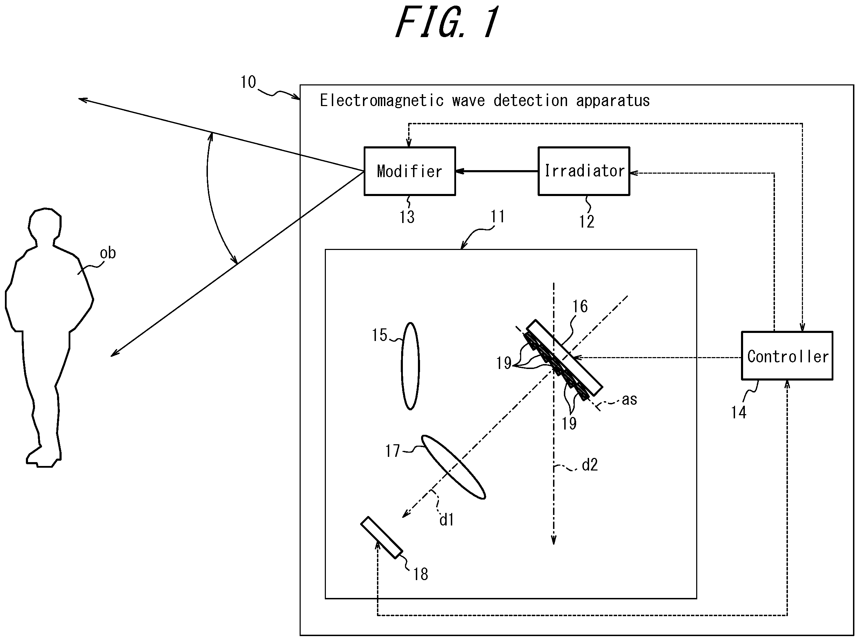

As illustrated in FIG. 1, an electromagnetic wave detection apparatus 10 according to a first embodiment of the present disclosure includes an electromagnetic wave detection unit 11, an irradiator 12, a modifier 13, and a controller 14.

In the drawings described below, the dashed lines connecting functional blocks indicate the flow of control signals or communicated information. The communication represented by the dashed lines may be wired communication or wireless communication. The solid lines projecting from each functional block indicate beams of electromagnetic waves.

The electromagnetic wave detection unit 11 includes a pre-stage optical system 15, a switching unit 16, a post-stage optical system 17, and a detector 18.

The pre-stage optical system 15 includes either or both of a lens and a mirror, for example, and forms an image of an object ob that becomes a subject of imaging.

It suffices for the switching unit 16 to be provided at or near a primary image formation position, which is the position where the image of the object ob located at a predetermined position separate from the pre-stage optical system 15 is formed by the pre-stage optical system 15. In the first embodiment, the switching unit 16 is provided at the primary image formation position.

The switching unit 16 has an action surface as on which electromagnetic waves that pass through the pre-stage optical system 15 are incident. The action surface as is formed by a plurality of switching elements 19 aligned two-dimensionally. The action surface as is a surface that, in at least one of the first state and the second state described below, produces effects on the electromagnetic waves such as reflection and transmission.

The switching unit 16 can switch each switching element 19 between a first state of propagating the electromagnetic waves incident on the action surface as in a first direction d1 and a second state of propagating the electromagnetic waves in a second direction d2 other than the first direction d1. As described below, the detector 18 is disposed in the first direction d1 from the switching unit 16. In the first state, the switching unit 16 therefore propagates the electromagnetic waves incident on the action surface as towards the detector 18. In the second state, the switching unit 16 propagates the electromagnetic waves incident on the action surface as in a direction other than the detector 18.

In the first embodiment, the first state is a first reflecting state of reflecting the electromagnetic waves incident on the action surface as in the first direction d1. The second state is a second reflecting state of reflecting the electromagnetic waves incident on the action surface as in the second direction d2.

In greater detail, the switching unit 16 of the first embodiment includes a reflecting surface that reflects the electromagnetic waves on each switching element 19. The switching unit 16 switches each switching element 19 between the first reflecting state and the second reflecting state by changing the orientation of the reflecting surface of each switching element 19.

In the first embodiment, the switching unit 16 includes a digital micro mirror device (DMD), for example. The DMD can drive minute reflecting surfaces that configure the action surface as to switch the reflecting surface on each switching element 19 between inclined states of +12° and -12° relative to the action surface as. The action surface as is parallel to the board surface of a substrate on which the minute reflecting surfaces are mounted in the DMD.

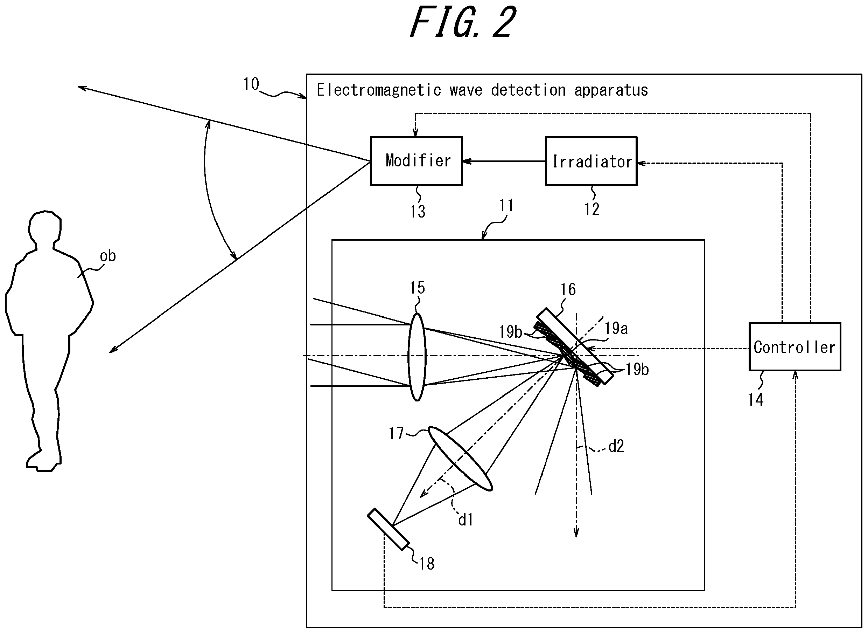

The switching unit 16 switches each switching element 19 between the first state and the second state based on control by the controller 14, described below. For example, the switching unit 16 can simultaneously switch a portion of the switching elements 19a to the first state and switch another portion of the switching elements 19b to the second state, as illustrated in FIG. 2. The switching unit 16 can propagate electromagnetic waves incident on the switching elements 19a switched to the first state in the first direction d1 and propagate electromagnetic waves incident on the switching elements 19b switched to the second state in the second direction d2.

As illustrated in FIG. 1, the post-stage optical system 17 is provided in the first direction d1 from the switching unit 16. The post-stage optical system 17 includes either or both of a lens and a mirror, for example. The post-stage optical system 17 forms an image of the object ob represented by the electromagnetic waves whose propagation direction is switched at the switching unit 16.

The detector 18 is provided along the path of electromagnetic waves that propagate through the post-stage optical system 17 after propagating in the first direction d1 due to the switching unit 16. The detector 18 detects electromagnetic waves that pass through the post-stage optical system 17, i.e. electromagnetic waves that propagate in the first direction d1.

In the first embodiment, the detector 18 is an active sensor that detects reflected waves, from the object ob, of electromagnetic waves irradiated towards the object ob from the irradiator 12. The detector 18 in the first embodiment detects reflected waves, from the object ob, of electromagnetic waves irradiated towards the object ob after being irradiated from the irradiator 12 and reflected by the modifier 13.

In greater detail, the detector 18 of the first embodiment includes an element configured as a ranging sensor. For example, the detector 18 includes a single element such as an avalanche photodiode (APD) or a photodiode (PD). The detector 18 may include an element array, such as an APD array, a PD array, a ranging imaging array, or a ranging image sensor.

In the first embodiment, the detector 18 transmits detection information, indicating the detection of reflected waves from the object ob, to the controller 14 as a signal. In greater detail, the detector 18 detects electromagnetic waves in the infrared light band.

The detector 18 may detect an image of electromagnetic waves in a band other than infrared rays, such as a visible light image. The detector 18 may also include a thermosensor. In this configuration, the electromagnetic wave detection apparatus 10 can acquire temperature image information with the detector 18.

It suffices for the single element configured as the above-described ranging sensor in the detector 18 to be capable of detecting electromagnetic waves. Image formation at the detection surface is not required. The detector 18 therefore need not be provided at a secondary image formation position, which is a position of image formation by the post-stage optical system 17. In other words, as long as electromagnetic waves from all angles of view can be incident on the detection surface, the detector 18 with this configuration may be disposed at any position along the path of electromagnetic waves that propagate in the first direction d1, due to the switching unit 16, and subsequently pass through the post-stage optical system 17.

The irradiator 12 emits at least one of infrared rays, visible light rays, ultraviolet rays, and radio waves. In greater detail, the irradiator 12 emits infrared rays in the first embodiment. The irradiator 12 irradiates the electromagnetic waves towards the object ob either indirectly via the modifier 13 or directly. In greater detail, the irradiator 12 irradiates the electromagnetic waves towards the object ob indirectly via the modifier 13.

In the first embodiment, the irradiator 12 emits a narrow beam, for example 0.5°, of electromagnetic waves. The irradiator 12 can emit electromagnetic waves in pulses. For example, the irradiator 12 includes a light emitting diode (LED), laser diode (LD), or the like. The irradiator 12 switches between emitting and not emitting electromagnetic waves based on control by the controller 14, described below.

The modifier 13 modifies the emission direction of electromagnetic waves emitted from the irradiator 12 by reflecting the electromagnetic waves while the orientation of the modifier 13 changes. The modifier 13 modifies the irradiation position of electromagnetic waves irradiated onto the object ob by modifying the emission direction. In other words, the modifier 13 scans the object ob with the electromagnetic waves emitted from the irradiator 12.

Accordingly, the detector 18 in the first embodiment works together with the modifier 13 to form a scanning-type ranging sensor. The modifier 13 scans the object ob one- or two-dimensionally. In the first embodiment, the modifier 13 scans the object ob two-dimensionally.

The modifier 13 is configured so that at least a portion of an irradiation region of the electromagnetic waves that are emitted by the irradiator 12 and reflected by the modifier 13 is included in an electromagnetic wave detection range in the detector 18. Accordingly, at least a portion of the electromagnetic waves irradiated onto the object ob via the modifier 13 can be detected by the detector 18.

The modifier 13 may, for example, include a micro electro mechanical systems (MEMS) mirror, a polygon mirror, a galvano mirror, or the like. In the first embodiment, the modifier 13 includes a MEMS mirror.

Based on control by the controller 14, described below, the modifier 13 modifies the direction in which electromagnetic waves are reflected. The modifier 13 may include an angle sensor, such as an encoder, and may notify the controller 14 of the angle detected by the angle sensor as information on the direction in which electromagnetic waves are reflected (direction information). This configuration allows the controller 14 to calculate the irradiation position based on the direction information acquired from the modifier 13. The controller 14 can also calculate the irradiation position based on a drive signal inputted to the modifier 13 to modify the direction in which electromagnetic waves are reflected.

The controller 14 includes one or more processors and a memory. The term "processor" encompasses either or both general-purpose processors that execute particular functions by reading particular programs and dedicated processors that are specialized for particular processing. The dedicated processor may include an application specific integrated circuit (ASIC). The processor may include a programmable logic device (PLD). The PLD may include a field-programmable gate array (FPGA). The controller 14 may include either or both of a system-on-a-chip (SoC) that has one processor or a plurality of processors working together and a system-in-a-package (SiP).

The controller 14 can control switching to the first state and the second state for each switching element 19. The controller 14 switches only a particular switching element 19, among the plurality of switching elements 19, to the first state. The particular switching element 19 in the first embodiment is a switching element 19, among the plurality of switching elements 19, on which reflected waves of the electromagnetic waves irradiated from the irradiator 12 onto the object ob are incident.

As described above, the controller 14 calculates the emission direction of electromagnetic waves, emitted from the irradiator 12, based on direction information acquired from the modifier 13 or a drive signal outputted from the controller 14 to the modifier 13. Based on the calculated emission direction, the controller 14 identifies the switching element 19 on which reflected waves of electromagnetic waves irradiated from the irradiator 12 onto the object ob are incident.

The position of the switching element 19 on which reflected waves are incident with respect to emission of electromagnetic waves in a certain emission direction is determined by design. Therefore, the controller 14 identifies the switching element 19 on which reflected waves are incident in correspondence with an emission direction on the basis of a formula, a correspondence table, or the like that associates the switching element 19 with the emission direction, for example. As described above, the controller 14 switches the identified switching element 19 to the first state.

The controller 14 acquires information related to the surroundings of the electromagnetic wave detection apparatus 10 based on electromagnetic waves detected by the detector 18. The information related to the surroundings may, for example, be distance information, image information, temperature information, and the like. Based on the detection information detected by the detector 18, the controller 14 in the first embodiment uses the time-of-flight (TOF) method to acquire distance information of the irradiation position irradiated by the irradiator 12, as described above.

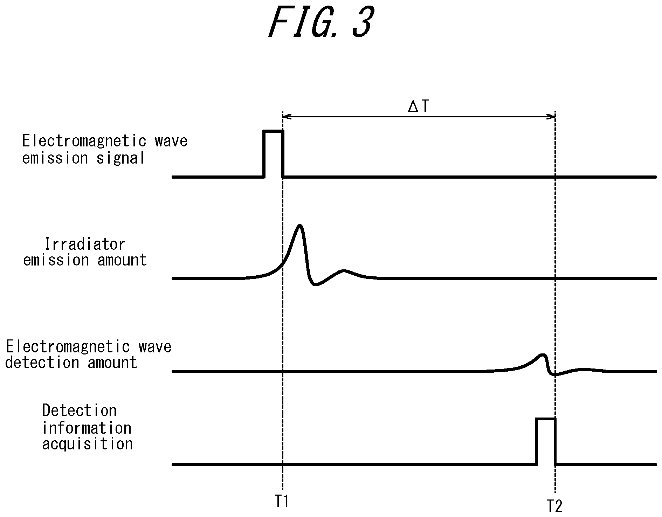

As illustrated in FIG. 3, the controller 14 causes the irradiator 12 to emit pulses of electromagnetic waves by inputting an electromagnetic wave emission signal to the irradiator 12 (see the "electromagnetic wave emission signal" section). The irradiator 12 irradiates electromagnetic waves based on the inputted electromagnetic wave emission signal (see the "irradiator emission amount" section). The electromagnetic waves emitted by the irradiator 12 and reflected by the modifier 13 to be irradiated on an arbitrary irradiation region are reflected in the irradiation region. The detector 18 then notifies the controller 14 of detection information, as described above, when detecting electromagnetic waves reflected in the irradiation region (see the "electromagnetic wave detection amount" section).

The controller 14 may, for example, include a time measurement large scale integrated circuit (LSI) and measure a time ΔT from a timing T1 at which the controller 20 caused the irradiator 12 to emit electromagnetic waves to a timing T2 at which the controller 20 acquires the detection information (see the "detection information acquisition" section). The controller 14 multiplies the time ΔT by the speed of light and divides by two to calculate the distance to the irradiation position.

As described above, the controller 14 calculates the irradiation position based on the direction information acquired from the modifier 13 or the drive signal that the controller 14 outputs to the modifier 13. By changing the irradiation position while calculating the distance to each irradiation position, the controller 14 creates one- or two-dimensional distance information.

The electromagnetic wave detection apparatus 10 of the first embodiment with the above configuration switches only a particular switching element 19, among the plurality of switching elements 19, to the first state. The range in the surrounding space of the body that emits the electromagnetic waves that each switching element 19 propagates towards the detector 18 differs for each switching element 19. Accordingly, the range in the surrounding space corresponding to a particular switching element 19 that propagates incident electromagnetic waves towards the detector 18 becomes the field of view, i.e. the detection range of the detector 18. The electromagnetic wave detection apparatus 10 with the above configuration can therefore change the field of view by changing the particular switching element 19. Furthermore, the electromagnetic wave detection apparatus 10 changes the field of view using the switching elements 19, which can be manufactured in a minute size. A movement mechanism for moving a structure thus becomes unnecessary, simplifying the configuration. The effects of such a configuration are the same for the electromagnetic wave detection unit of the second embodiment, described below.

In the electromagnetic wave detection apparatus 10 of the first embodiment, the controller 14 switches a switching element 19, on which reflected waves of the electromagnetic waves are irradiated from the irradiator 12 onto the object ob, to the first state as a particular switching element 19. Detection of an electromagnetic wave component of the object ob at a position not irradiated by electromagnetic waves from the irradiator 12 is not desired in an active sensor. Such an electromagnetic wave component becomes noise in the information related to the surroundings. In other words, the switching element 19 that the electromagnetic wave detection apparatus 10 with the above configuration switches to the first state as the particular switching element 19 from among the plurality of switching elements 19 is a switching element 19 other than switching elements 19 on which only electromagnetic waves representing noise in the detection results of the detector 18 are incident. The electromagnetic wave detection apparatus 10 can thus prevent detection of an electromagnetic wave component representing noise in the information related to the surroundings and improve the accuracy of the information related to the surroundings.

The electromagnetic wave detection apparatus 10 of the first embodiment includes the irradiator 12. Accordingly, by irradiating electromagnetic waves onto the object ob, the electromagnetic wave detection apparatus 10 can cause the detector 18 to function as an active sensor.

The electromagnetic wave detection apparatus 10 of the first embodiment determines the particular switching element 19 based on the emission direction of electromagnetic waves emitted by the irradiator 12. With this configuration, the electromagnetic wave detection apparatus 10 can determine the particular switching element 19 based on the emission direction, which is easily acquirable, without needing to detect information such as the irradiation position using a camera or the like.

The electromagnetic wave detection apparatus 10 of the first embodiment includes the modifier 13. With this configuration, the electromagnetic wave detection apparatus 10 can scan the object ob using electromagnetic waves emitted by the irradiator 12. In other words, the electromagnetic wave detection apparatus 10 can cause the detector 18 to work together with the modifier 13 and function as a scanning-type active sensor. Accordingly, the electromagnetic wave detection apparatus 10 can use the detector 18 to acquire information in accordance with positions in one or two dimensions.

Next, an electromagnetic wave detection apparatus according to a second embodiment of the present disclosure is described. The second embodiment differs from the first embodiment by not including a reflector and by having a different configuration for the irradiator and the electromagnetic wave detection unit. The second embodiment is described below, focusing on the differences from the first embodiment. The same reference signs are used for components with the same configuration as in the first embodiment.

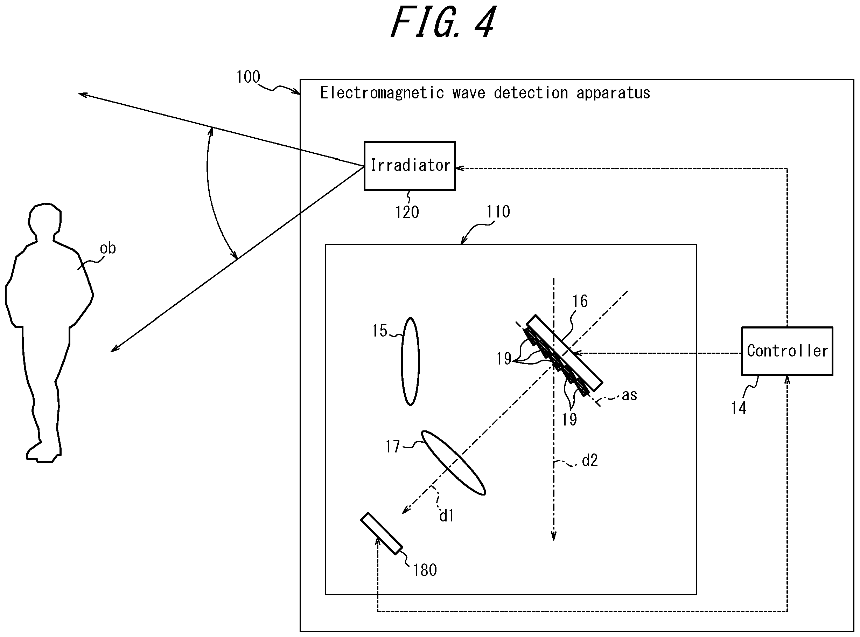

As illustrated in FIG. 4, an electromagnetic wave detection apparatus 100 according to a second embodiment of the present disclosure includes an electromagnetic wave detection unit 110, an irradiator 120, and a controller 14.

Like the first embodiment, the electromagnetic wave detection unit 110 includes a pre-stage optical system 15, a switching unit 16, a post-stage optical system 17, and a detector 180. The configuration and functions of the pre-stage optical system 15, the switching unit 16, and the post-stage optical system 17 are the same as in the first embodiment.

The detector 180 is provided along the path of electromagnetic waves that propagate through the post-stage optical system 17 after propagating in the first direction d1 due to the switching unit 16, as in the first embodiment. The detector 180 detects the electromagnetic waves that propagate from the switching unit 16 in the first direction d1, as in the first embodiment.

The detector 180 is an active sensor that detects reflected waves, from the object ob, of electromagnetic waves irradiated towards the object ob from the irradiator 12, like the first embodiment.

In greater detail, the detector 180 in the second embodiment includes an element array. The detector 180 specifically includes an element array configured as a ranging sensor. For example, the detector 18 includes an element array such as an APD array, a PD array, a ranging imaging array, a ranging image sensor, or the like. The detector 180 may include a single element such as an avalanche photodiode (APD) or a photodiode (PD).

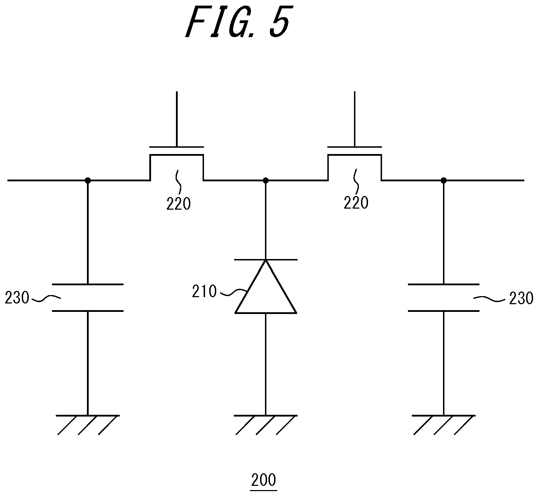

The detector 180 in the second embodiment is an element array configuring a ranging sensor. For example, each element 200 in the detector 180 includes a single converter 210, a plurality of switches 220, and the same number of accumulators 230 as switches 220, as illustrated in FIG. 5.

The converter 210 is, for example, an avalanche photodiode (APD) or a photodiode (PD). The converter 210 converts incident electromagnetic waves to an electric signal in accordance with the intensity of the electromagnetic waves. Each switch 220 is, for example, a field effect transistor (FET). The switches 220 can switch between allowing and blocking transfer of the electric signal generated by the converter 210 to the accumulators 230. Each accumulator 230 is, for example, a capacitor. The accumulators 230 accumulate the electric signal generated by the converter 210.

In greater detail, each element 200 in the second embodiment includes one converter 210, two switches 220, and two accumulators 230. Each element 200 may be configured to include a plurality of converters 210.

The transfer time of the electric signal from the converter 210 to the plurality of accumulators 230 in each element 200 is shifted by a predetermined phase difference relative to another accumulator 230. In the second embodiment, the accumulation period of the two accumulators 230 in each element 200 is shifted 180°.

Unlike the first embodiment, the detector 180 transmits the detection information, which is the intensity of reflected waves from the object ob detected by each element, to the controller 14 as a signal. In greater detail, the detector 180 detects electromagnetic waves in the infrared light band, as in the first embodiment.

Unlike the first embodiment, the detector 180 that is an element array generates information in image form. Because of this, blur decreases as the detector 180 is closer to the image formation position. The detector 180 is therefore preferably provided near the secondary image formation position, which is the position of image formation by the post-stage optical system 17, and most preferably at the secondary image formation position, unlike the first embodiment. In greater detail, the detector 180 in the second embodiment is provided at the secondary image formation position.

The irradiator 120 emits at least one of infrared rays, visible light rays, ultraviolet rays, and radio waves, as in the first embodiment. In greater detail, the irradiator 120 emits infrared rays, as in the first embodiment. The irradiator 120 irradiates the electromagnetic waves towards the object ob, like the first embodiment.

Unlike the first embodiment, the irradiator 120 emits electromagnetic waves radially over a wide angle. The irradiator 120 can emit electromagnetic waves in pulses, as in the first embodiment. The irradiator 120 is an LED, an LD, or the like, as in the first embodiment. The irradiator 120 switches between emitting and not emitting electromagnetic waves based on control by the controller 14, described below, as in the first embodiment.

Like the first embodiment, the controller 14 in the second embodiment controls switching between the first state and the second state for each switching element 19. The controller 14 switches only a particular switching element 19, among the plurality of switching elements 19, to the first state, as in the first embodiment. Unlike the first embodiment, the particular switching element 19 is a switching element, among the plurality of switching elements 19, on which electromagnetic waves from a particular range within the entire field of view are incident.

The controller 14 determines the particular range automatically or manually. The controller 14 determines the particular range automatically using a predetermined method.

The controller 14 automatically causes the detector 180 to detect electromagnetic waves while all of the switching elements 19 have been switched to the first state, for example. The controller 14 then distinguishes a switching element 19 that causes electromagnetic waves to be incident on an element of the detector 180 that detects electromagnetic waves of an intensity below a noise threshold. The controller 14 determines that the range over which the distinguished switching element 19 causes electromagnetic waves to be incident is the particular range.

The noise threshold is a value for distinguishing whether the detected electromagnetic waves are electromagnetic waves that have a greater emission intensity than is assumed for the object of detection ob and are emitted by a body other than the object of detection ob. The body other than the object of detection ob is, for example, the sun, headlights, a streetlight, or a luminescent sensor such as a laser radar. Accordingly, the controller 14 determines that the particular range is the field of view outside the range in which the body other than the object of detection ob exists, where the detection results of the detector 180 become noise.

The controller 14 also determines that the particular range is at least a partial range, within the entire field of view, detected by an input interface that detects a manual operation on the electromagnetic wave detection apparatus 100, for example. The controller 14 switches the particular switching element 19 corresponding to the particular range to the first state and switches switching elements 19 other than the particular switching element 19 to the second state.

As in the first embodiment, the controller 14 acquires information related to the surroundings of the electromagnetic wave detection apparatus 10 based on electromagnetic waves detected by the detector 180. The information related to the surroundings may, for example, be distance image information, image information, temperature image information, and the like. In greater detail, the controller 14 in the second embodiment acquires distance image information. The controller 14 uses the detection information detected by the detector 180, as described above, to acquire distance image information by flash ToF for the object ob irradiated by the irradiator 120. Details are provided below.

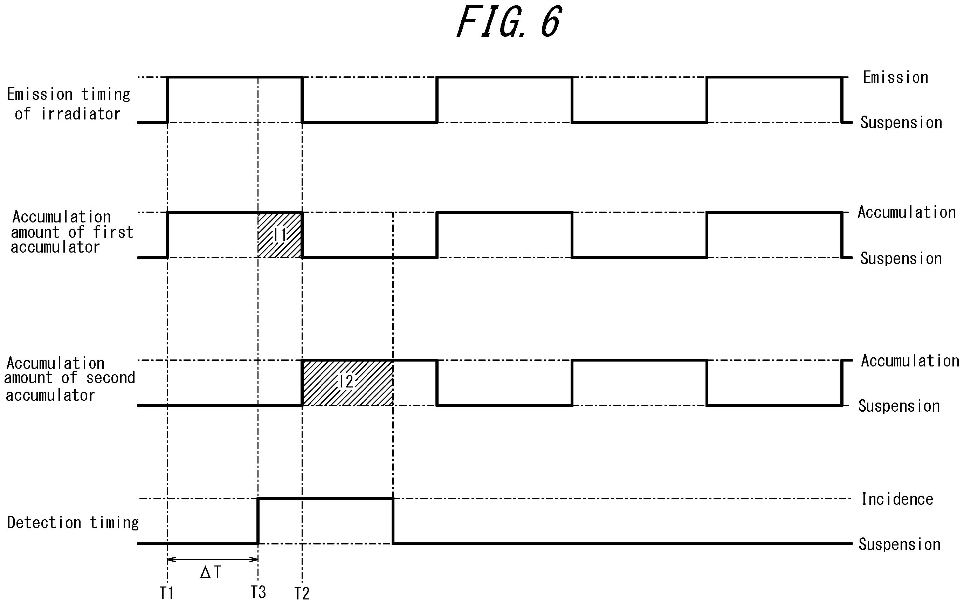

As illustrated in FIG. 6, the controller 14 causes the irradiator 120 to emit pulses of electromagnetic waves that are switched ON/OFF by inputting an electromagnetic wave emission signal to the irradiator 120 (see the "emission timing of irradiator" section). In the second embodiment, the controller 14 turns a first switch 220 in all of the elements 200 ON and causes an electric signal to be accumulated in a first accumulator 230 in synchronization with emission of a single pulse of electromagnetic waves (see "accumulation amount of first accumulator" section). The controller 14 turns a second switch 220 in all of the elements 200 ON and causes an electric signal to be accumulated in a second accumulator 230 in synchronization with suspension of electromagnetic wave emission (see "accumulation amount of second accumulator" section).

In a configuration with three or more accumulators 230 in the element 200, one cycle of irradiation and non-irradiation of a pulse of electromagnetic waves in the irradiator 120 may be divided by the number of accumulators 230 into periods, and an electric signal may be accumulated in each accumulator 230 in synchronization with the corresponding period.

The controller 14 acquires an electric signal I1 corresponding to the intensity of electromagnetic waves detected by the converter 210 during the accumulation period of the first accumulator 230 for emission of a single pulse of electromagnetic waves during the period from timing T1 to T2 (see "accumulation amount of first accumulator" section). The controller 14 also acquires an electric signal I2 corresponding to the intensity of electromagnetic waves detected by the converter 210 during the accumulation period of the second accumulator 230 for emission of electromagnetic waves during the period from timing T1 to T2 (see "accumulation amount of second accumulator" section).

The controller 14 calculates a timing T3 at which electromagnetic waves reach the element 200 based on the ratio between the electric signals 11, I2 that correspond to the intensity of electromagnetic waves accumulated respectively in the first accumulator 230 and the second accumulator 230 (see "detection timing" section).

The arrival of electromagnetic waves at the element 200 is delayed with respect to irradiation of the electromagnetic waves from the irradiator 120 in accordance with the distance, from the electromagnetic wave detection apparatus 100, of the object ob that reflects the irradiated electromagnetic waves. As the delay increases, the accumulation amount of the electric signal in the second accumulator 230 increases as compared to the accumulation amount of the electric signal in the first accumulator 230. Therefore, as described above, the timing T3 at which the electromagnetic waves arrive at the element 200 can be calculated based on the ratio of the electric signals 11, I2 accumulated respectively in the first accumulator 230 and the second accumulator 230.

For each element 200, the controller 14 calculates the time ΔT from the emission start timing T1 of electromagnetic waves to the timing T3 when the electromagnetic waves reach the element 200. Furthermore, the controller 14 multiplies the time ΔT by the speed of light and divides by two to calculate the distance to a small area on the object ob corresponding to each element 200.

In the electromagnetic wave detection apparatus 100 of the second embodiment with the above configuration, the controller 14 switches a switching element 19, on which electromagnetic waves from a particular range of the whole field of view are incident, to the first state as a particular switching element 19. This configuration allows the electromagnetic wave detection apparatus 100 to detect only the electromagnetic waves in a particular range, within the field of view, for which detection of electromagnetic waves is desired.

In the electromagnetic wave detection apparatus 100 of the second embodiment, the particular range is a range outside the range in the surrounding space that causes electromagnetic waves representing noise in the detection results of the detector 180 to be incident on the switching element 19. Detection of an electromagnetic wave component from a body, other than the object of detection ob, that is a noise-emitting source with an excessive emission intensity is not desirable when electromagnetic waves are being detected. Such an electromagnetic wave component becomes noise in the information related to the surroundings. Accordingly, the electromagnetic wave detection apparatus 100 with the above configuration can prevent detection of an electromagnetic wave component representing noise in the information related to the surroundings and improve the accuracy of the information related to the surroundings.

Although the present disclosure has been explained using the accompanying drawings and examples, it is to be noted that various changes and modifications will be apparent to those of ordinary skill in the art based on the present disclosure. Therefore, such changes and modifications are to be understood as included within the scope of the present disclosure.

For example, in the first embodiment, the irradiator 12, modifier 13, controller 14, and electromagnetic wave detection unit 11 configure the electromagnetic wave detection apparatus 10, but instead of a single apparatus, at least the controller 14 and the electromagnetic wave detection unit 11 may configure an electromagnetic wave detection system. Similarly, in the second embodiment, the irradiator 120, the controller 14, and the electromagnetic wave detection unit 110 configure the electromagnetic wave detection apparatus 100, but at least the controller 14 and the electromagnetic wave detection unit 110 may configure an electromagnetic wave detection system.

In the first and second embodiments, the switching unit 16 can switch the propagation direction of the electromagnetic waves incident on the action surface as between two directions, i.e. the first direction d1 and the second direction d2, but the switching unit 16 may instead be capable of switching the propagation direction among three or more directions.

In the switching unit 16 of the first and second embodiments, the first state is a first reflecting state for reflecting the electromagnetic waves incident on the action surface as in the first direction d1, and the second state is a second reflecting state for reflecting these electromagnetic waves in the second direction d2. This configuration is not, however, limiting.

For example, the second state may be a transmitting state for transmitting the electromagnetic waves incident on the action surface as for the electromagnetic waves to propagate in the second direction d2. In greater detail, the switching unit 16 may include a shutter, on each switching element 19, that has a reflecting surface that reflects electromagnetic waves. The switching unit 16 with this configuration can open and close the shutter of each switching element 19 to switch each switching element 19 between the first reflecting state and the transmitting state that is the second reflecting state. An example of the switching unit 16 with such a configuration is a switching unit that includes a MEMS shutter including a plurality of openable shutters arranged in an array. Another example of the switching unit 16 is a switching unit that includes a liquid crystal shutter capable of switching, in accordance with liquid crystal orientation, between the reflecting state for reflecting electromagnetic waves and the transmitting state for transmitting electromagnetic waves. The switching unit 16 with this configuration can switch each switching element 19 between the reflecting state as the first state and the transmitting state as the second state by switching the liquid crystal orientation of each switching element 19.

The electromagnetic wave detection apparatus 100 of the second embodiment is configured so that the detector 180 is an active sensor. The electromagnetic wave detection apparatus 100 is not, however, limited to this configuration. For example, the electromagnetic wave detection apparatus 100 can also achieve similar effects as in the second embodiment when the detector 180 is a passive sensor.

For example, the detector 180 in the second embodiment may be an image sensor, and the detector 180 may be caused to detect electromagnetic waves without the irradiator 120 irradiating electromagnetic waves. Similar effects as in the second embodiment can also be achieved with this configuration.

Furthermore, in a configuration adopting an image sensor for the detector 180 in the second embodiment, the controller 14 may be capable of adjusting the switching time to the first state and the second state during a photodetection period of one frame of the detector 180 that is an image sensor. Such a configuration can adjust the switching time to the first state of a portion of the switching elements 19 during a photodetection period of one frame, thereby reducing the intensity of electromagnetic waves detected by the detector 180 as compared to other switching elements 19. By reducing the intensity of electromagnetic waves, this configuration can, for example, generate image information of the entire field of view while reducing electromagnetic waves reaching the detector 180 to a degree that does not cause noise, instead of avoiding the actual detection of electromagnetic waves from a noise-emitting body other than the object of detection ob.

While the disclosed system has a variety of modules and/or units for implementing particular functions, these modules and units have only been indicated schematically in order to briefly illustrate the functionality thereof. It should be noted that no particular hardware and/or software is necessarily indicated. In this sense, it suffices for the modules, units, and other constituent elements to be hardware and/or software implemented so as to substantially execute the particular functions described herein. The various functions of different constituent elements may be implemented by combining or separating hardware and/or software in any way, and the functions may each be used individually or in some combination. An input/output (I/O) device or user interface including, but not limited to, a keyboard, display, touchscreen, or pointing device may be connected to the system directly or via an I/O controller. In this way, the various subject matter disclosed herein may be embodied in a variety of forms, and all such embodiments are included in the scope of the subject matter in the present disclosure.

### REFERENCE SIGNS LIST

- 10, 100: Electromagnetic wave detection apparatus
- 11, 110: Electromagnetic wave detection unit
- 12, 120: Irradiator
- 13: Modifier
- 14: Controller
- 15: Pre-stage optical system
- 16: Switching unit
- 17: Post-stage optical system
- 18,: 180Detector
- 19, 19a, 19b: Switching element
- 200: Element
- 210: Converter
- 220: Switch
- 230: Accumulator
- as: Action surface
- d1: First direction
- d2: Second direction
- ob: Object

## Claims

1. An electromagnetic wave detection apparatus comprising:
a detector configured to detect electromagnetic waves;
a switching unit comprising a plurality of switching elements capable of switching between a first state of propagating incident electromagnetic waves towards the detector and a second state of propagating incident electromagnetic waves in a direction other than the detector; and
a controller capable of controlling switching of each switching element to the first state and the second state and configured to switch only a particular switching element among the plurality of switching elements to the first state.

2. The electromagnetic wave detection apparatus of claim 1, wherein the particular switching element is a switching element, among the plurality of switching elements, on which reflected waves of electromagnetic waves irradiated from an irradiator on an object are incident.

3. The electromagnetic wave detection apparatus of claim 2, further comprising the irradiator.

4. The electromagnetic wave detection apparatus of claim 2 or 3, wherein the controller is configured to determine the particular switching element based on an emission direction of electromagnetic waves emitted by the irradiator.

5. The electromagnetic wave detection apparatus of claim 4, wherein the emission direction is modified by a modifier.

6. The electromagnetic wave detection apparatus of claim 5, further comprising the modifier.

7. The electromagnetic wave detection apparatus of claim 1, wherein the particular switching element is a switching element, among the plurality of switching elements, on which electromagnetic waves from a particular range are incident.

8. The electromagnetic wave detection apparatus of any one of claims 1 to 7, wherein the particular switching element is a switching element, among the plurality of switching elements, other than a switching element on which only electromagnetic waves representing noise in a detection result of the detector are incident.

9. The electromagnetic wave detection apparatus of any one of claims 1 to 8,
wherein the detector is an image sensor; and
wherein the controller is capable of adjusting a switching time the switching elements to the first state during a photodetection period of one frame of the image sensor.

10. An electromagnetic wave detection system comprising:
a detector configured to detect electromagnetic waves;
a switching unit comprising a plurality of switching elements capable of switching between a first state of propagating incident electromagnetic waves towards the detector and a second state of propagating incident electromagnetic waves in a direction other than the detector; and
a controller capable of controlling switching of each switching element to the first state and the second state and configured to switch only a particular switching element among the plurality of switching elements to the first state.

11. A program for an electromagnetic wave detection apparatus comprising a detector configured to detect electromagnetic waves and a switching unit comprising a plurality of switching elements capable of switching between a first state of propagating incident electromagnetic waves towards the detector and a second state of propagating incident electromagnetic waves in a direction other than the detector, the program causing the electromagnetic wave detection apparatus to:
switch only a particular switching element among the plurality of switching elements to the first state.
